# EUROPÄISCHE PATENTSCHRIFT

(11) **EP 1 384 019 B1**
(45) Veröffentlichungstag und Bekanntmachung des Hinweises auf die Patenterteilung: **25.08.2004**
(21) Anmeldenummer: 02740535.6
(22) Anmeldetag: 27.04.2002
(51) Int. Cl.: F16H 61/02, F16H 3/30

(54) **SCHALTBARES GETRIEBE**
SHIFTABLE TRANSMISSION
BOITE DE VITESSES COMMUTABLE

(30) Priorität: 03.05.2001 DE 10121632
(43) Veröffentlichungstag der Anmeldung: 28.01.2004
(73) Patentinhaber: ZF FRIEDRICHSHAFEN AG, 88038 Friedrichshafen (DE)
(72) Erfinder: EYMÜLLER, Helmut, 88046 Friedrichshafen (DE); STÜTZLE, Siegfried, 88045 Friedrichshafen (DE); LEGNER, Jürgen, 88048 Friedrichshafen (DE)
(86) Internationale Anmeldenummer: PCT/EP2002/004686
(87) Internationale Veröffentlichungsnummer: WO 2002/090800

(56) Entgegenhaltungen:
- EP-A- 0 659 250
- WO-A-89/08796
- WO-A-91/00443
- DE-A- 2 016 712
- DE-A- 2 732 121
- DE-A- 2 841 053
- FR-A- 1 346 946
- FR-A- 2 535 810
- US-A- 4 516 444

## Beschreibung

Die Erfindung bezieht sich auf ein schaltbares Getriebe nach der im Oberbegriff von Anspruch 1 näher definierten Art.

Gattungsgemäße schaltbare Getriebe, siehe die WO 89/08796, werden insbesondere in Mobilbaggern, Radladern und ähnlichen Arbeitsmaschinen eingesetzt. Dabei sind die einzelnen Gangstufen des Schaltgetriebes über je eine Reibungskupplung wechselweise zuund abschaltbar. Wenigstens zwei der Reibungskupplungen sind als Federspeicherkupplungen ausgebildet und durch Öldruck im Öffnungssinne aufsteuerbar, welcher von einer Druckmittelquelle erzeugt wird. Vorzugsweise ist eine Reibungskupplung als Bremse ausgeführt und besitzt eine statische, leckölfreie Ölzuführung.

Ein derartiges schaltbares Getriebe ist in der EP 0 408 592 B1 offenbart, in welchem eine erste Betätigungseinrichtung durch Druckbeaufschlagen im Öffnungssinne betätigbar und durch Drucklosschalten über eine Federkraft im Schließsinne betätigbar ist, und eine zweite Betätigungseinrichtung durch Druckbeaufschlagung im Öffnungssinne betätigbar und im Schließsinne durch Drucklosschalten über eine Federkraft betätigbar ist, wobei die beiden Betätigungseinrichtungen koaxial zueinander angeordnet sind. Werden beide Betätigungseinrichtungen drucklos geschaltet und somit beide Kupplungen geschlossen, ist der Abtrieb des Getriebes blockiert, wodurch eine Parkbremsstellung erreicht wird. Die Federkraft der ersten Betätigungseinrichtung ist so ausgelegt, daß die zur ersten Betätigungseinrichtung zugehörige Kupplung das benötigte Drehmoment übertragen kann. Ebenso ist die Federkraft der zweiten Betätigungseinrichtung so ausgelegt, daß die zur zweiten Betätigungseinrichtung gehörende Kupplung das benötigte Drehmoment übertragen kann. Wird die Parkbremse bei drehendem Abtrieb des Getriebes, d. h. bei fahrendem Fahrzeug, eingelegt, so werden die erste und die zweite Betätigungseinrichtung drucklos geschaltet, wodurch beide Kupplungen durch die Federkräfte im Schließsinne betätigt werden. Ebenso wird dies erreicht, wenn die Druckmittelquelle infolge eines Defekts das benötigte Druckniveau nicht liefert oder die Druckmittelzuführungen beschädigt sind. Da die Federkräfte der Betätigungseinrichtungen so ausgelegt sind, daß die benötigten Drehmomente übertragen werden können, wird bei einer derartigen Bremsung eine zu starke Verzögerung erreicht, wodurch das Fahrzeug in unkontrollierte Situationen geraten kann.

Die EP 0 466 742 B1 offenbart ein schaltbares Getriebe, bei welchem zwei Kupplungen durch Druckbeaufschlagung der Betätigungseinrichtungen im Öffnungssinne betätigbar und durch Drucklosschalten der Betätigungseinrichtungen im Schließsinne betätigbar sind, wobei bei Drucklosschaltung beider Betätigungseinrichtungen der Abtrieb des Getriebes bremsbar ist, wobei eine Druckmittelquelle zusätzlich einen Speicher mit Druckmittel versorgt, welcher im Falle einer derartigen Bremsung eine erste Betätigungseinrichtung so lange mit Druckmittel versorgt, bis das Getriebe das Fahrzeug kontrolliert abgebremst hat. Eine derartige Versorgung der Betätigungseinrichtungen mit Druckmittel ist sehr aufwendig und teuer. Da bei diesem Getriebe nur eine Betätigungseinrichtung eine statische Ölzuführung aufweist, die Ölzuführung zur zweiten Betätigungseinrichtung dynamisch ausgeführt ist, ist es notwendig zu gewährleisten, daß bei einer Notbremsung der Speicher immer mit der ersten Betätigungseinrichtung verbunden ist. Durch die Anordnung einer statischen und einer dynamischen Druckmittelzuführung in einem Getriebe weist das Getriebe erheblich mehr Teile und Dichtstellen auf.

Die EP 0 659 250 B1 und die EP 0 745 199 B1 offenbaren ein schaltbares Getriebe mit Federspeicherbremsen, bei welchen die Betätigungseinrichtungen über ein Drosselrückschlagventil mit Druckmittel beaufschlagbar sind, wodurch die Betätigungseinrichtungen schnell im Öffnungssinne betätigt werden können, jedoch der Schließvorgang langsam abläuft. Hierdurch ist gewährleistet, daß immer eine Kupplung zuerst öffnet, bevor die zweite Kupplung geschlossen ist.

Es ist weiterhin eine Anordnung aus der DE-A-2 732 121 bekannt, bei der die Gänge über eine gemeinsame Federanordnung und nicht mit überlagerung von Federkraft und hydraulischer Druckkraft geschaltet werden.

Der vorliegenden Erfindung liegt die Aufgabe zugrunde, ein schaltbares Getriebe zu schaffen, welches sich durch einen einfachen Aufbau der Betätigungseinrichtungen auszeichnet und aufwendige hydraulische Ansteuerungen entfallen.

Die Erfindung wird mit einem, auch die kennzeichnenden Merkmale des Hauptanspruchs aufweisenden, gattungsgemäßen schaltbaren Getriebe gelöst.

Erfindungsgemäß weist das schaltbare Getriebe mindestens zwei Betätigungseinrichtungen auf, welche durch Druckbeaufschlagung im Öffnungssinne und durch Drucklosschaltung über eine Feder im Schließsinne betätigbar sind. Die Betätigungseinrichtungen sind so angeordnet, daß eine erste Betätigungseinrichtung im drucklosen Zustand über eine Federkraft eine Bremse im Schließsinne betätigt. Wird gleichzeitig eine zweite Betätigungseinrichtung gegen eine Federkraft im Öffnungssinne betätigt, so wirkt auf die erste Betätigungseinrichtung die Federkraft der ersten Betätigungseinrichtung und zusätzlich eine hydraulische Kraft aus der Druckbeaufschlagung der zweiten Betätigungseinrichtung. Wird die erste Betätigungseinrichtung mit Druck beaufschlagt und die zweite Betätigungseinrichtung drucklos geschaltet, so betätigt die Feder der zweiten Betätigungseinrichtung diese im Schließsinne. Werden beide Betätigungseinrichtungen drucklos geschaltet, welches einem Notbremsvorgang entspricht, so wirkt auf die erste Betätigungseinrichtung nur die Federkraft der ersten Betätigungseinrichtung und auf die zweite Betätigungseinrichtung die Federkraft der zweiten Betätigungseinrichtung. Somit ist es möglich, die Federkraft der ersten Betätigungseinrichtung so auszulegen, daß die dynamische Abbremsung des Fahrzeugs kontrolliert ablaufen und das benötigte übertragbare Drehmoment bei einer Schaltung eines Ganges über die erste Betätigungseinrichtung übertragen werden kann, da in diesem Fall zur Federkraft noch die hydraulische Kraft der zweiten Betätigungseinrichtung aufsummiert wird. Vorzugsweise besteht die erste Betätigungseinrichtung aus einem über eine Feder betätigten Kolben, welcher im Gehäuse des Getriebes angeordnet ist, wobei das Gehäuse des Getriebes einen Teil des Zylinders der Betätigungseinrichtung bildet, wodurch eine statische Ölzuführung erreicht wird. Der Kolben der zweiten Betätigungseinrichtung ist koaxial zum Kolben der ersten Betätigungseinrichtung angeordnet, wobei der Kolben der ersten Betätigungseinrichtung den Zylinder für die zweite Betätigungseinrichtung bildet. Die Druckmittelzuführung zum Kolben der zweiten Betätigungseinrichtung ist vorzugsweise durch den Kolben der ersten Betätigungseinichtung angeordnet, wodurch auch die zweite Betätigungseinrichtung eine statische Druckmittelzuführung aufweist. Vorzugsweise ist die Federkraft der zweiten Betätigungseinrichtung so ausgelegt, daß bei einer dynamischen Notabbremsung, d. h., bei Drucklosschalten beider Betätigungseinrichtungen, die zur zweiten Betätigungseinrichtung gehörende Kupplung so geschlossen wird, daß die Lamellen der Kupplung während der dynamischen Abbremsung keine Differenzdrehzahl aufweisen und die dynamische Abbremsung über eine abnehmende Differenzdrehzahl der zur ersten Betätigungseinrichtung gehörenden Kupplung erfolgt. Vorzugsweise ist die Kupplung der ersten Betätigungseinrichtung radial außerhalb der Kupplung der zweiten Betätigungseinrichtung angeordnet, wodurch eine gute Wärmeabfuhr sowie Wärmekapazität durch die radial größeren Lamellen erreicht wird. Vorzugsweise sind die Betätigungseinrichtungen und die dazugehörigen Kupplungen axial im selben Bereich angeordnet.

Durch die Anordnung der Kupplungen bzw. Bremsen und der Betätigungseinrichtungen im axial selben Bereich wird eine geringe Baulänge des Getriebes erreicht. Indem der Kolben der zweiten Betätigungseinrichtung innerhalb des Kolbens der ersten Betätigungseinrichtung angeordnet ist und der Kolben der ersten Betätigungseinrichtung den Zylinder für den Kolben der zweiten Betätigungseinrichtung bildet, ist es möglich, die Betätigungseinrichtungen kompakt auszuführen und indem die Druckmittelzufuhr zum Kolben der zweiten Betätigungseinrichtung durch den Kolben der ersten Betätigungseinrichtung geführt wird, kann sowohl die erste Betätigungseinrichtung als auch die zweite Betätigungseinrichtung mit einer statischen Ölzuführung ausgeführt sein. Indem beim Drucklosschalten der ersten Betätigungseinrichtung und Druckbeaufschlagen der zweiten Betätigungseinrichtung auf die Kupplung der ersten Betätigungseinrichtung die Federkraft der ersten Betätigungseinrichtung und die hydraulische Kraft der zweiten Betätigungseinrichtung wirkt, ist es möglich, bei dem geschalteten Gang ausreichend Drehmoment übertragen zu können, und bei einer Notbremsung, d. h. bei Drucklosschalten beider Betätigungseinrichtungen, das Fahrzeug kontrolliert abzubremsen. Somit sind keine aufwendigen Speicher und Steuerungseinrichtungen notwendig. Ebenso wird der Bauraum für die Feder der ersten Betätigungseinrichtung verringert, da die Federkraft reduziert ist. Indem die Feder der zweiten Betätigungseinrichtung so ausgelegt ist, daß bei einer Notbremsung die zur zweiten Betätigungseinrichtung gehörende Kupplung keine Differenzdrehzahl aufweist, und die dynamische Abbremsung über die zur ersten Betätigungseinrichtung gehörende Kupplung erfolgt, diese jedoch radial außerhalb der zur zweiten Betätigungseinrichtung gehörenden Kupplung angeordnet ist, ist eine ausreichende Wärmeabfuhr gewährleistet. Sind die Gänge im Getriebe so angeordnet, daß bei geschlossener, zur ersten Betätigungseinrichtung gehörenden Kupplung der erste Gang geschaltet ist, und bei geschlossener, zur zweiten Betätigungseinrichtung gehörenden Kupplung der zweite Gang geschaltet ist, ist gewährleistet, daß bei einer Notbremsung immer der zweite Gang geschaltet wird, wodurch bei einer Notbremsung aus dem zweiten Gang keine unzulässige Abbremsung im ersten Gang erfolgt, da in diesem Gang die Verzögerung zu hoch wäre.

Weitere Merkmale sind der Figuren-Beschreibung zu entnehmen.

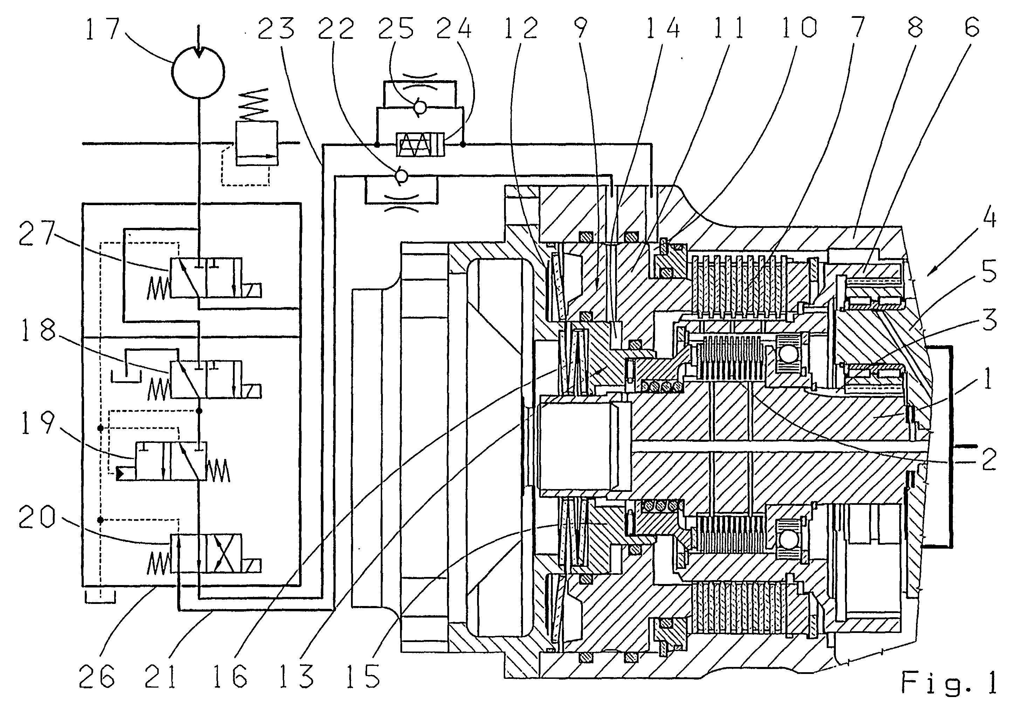

Die einzige Figur zeigt einen Ausschnitt aus einem schaltbaren Zweigang-Getriebe mit dazugehöriger hydraulischer Steuerung. Ein nicht dargestellter Antriebsmotor treibt eine Antriebswelle 1 an. Der Antriebsmotor kann ein Verbrennungsmotor oder ein hydrostatischer oder ein elektrischer Motor sein. Die Antriebswelle 1 ist einerseits mit Lamellen einer Kupplung 2 und andererseits mit einem inneren Zentralrad 3 eines Planetengetriebes 4 verbunden. Der Planetenträger 5 des Planetengetriebes 4 bildet den Abtrieb des Getriebes und das äußere Zentralrad 6 ist einerseits mit Lamellen der Kupplung 2 und andererseits mit Lamellen der Bremse 7 verbunden. Die Außenlamellen der Bremse 7 sind mit dem Gehäuse 8 verbunden und die Innenlamellen der Bremse 7 sind mit dem äußeren Zentralrad 6 verbunden. Die erste Betätigungseinrichtung 9 wird im Öffnungssinne betätigt, indem Druckmittel im Raum 10 den Kolben 11 gegen die Federkraft der Feder 12 bewegt. Der Kolben 11 der ersten Betätigungseinrichtung 9 wird im Schließsinne betätigt, indem der Raum 10 drucklos geschaltet wird und die Federkraft der Feder 12 den Kolben auf die Bremse 7 drückt. Die zweite Betätigungseinrichtung 13 wird im Öffnungssinne betätigt, indem Druckmittel durch den Kolben 11 in den Raum 14 geleitet wird und den Kolben 15 gegen die Federkraft der Feder 16 bewegt. Ist der Raum 14 drucklos, so wird der Kolben 15 durch die Federkraft der Feder 16 auf die Kupplung 2 gedrückt. Der erste Gang des Getriebes wird geschaltet, indem eine Druckmittelquelle 17, welche bei einem hydrostatischen Antrieb auch die Speisepumpe des hydrostatischen Antriebs sein kann, Druckmittel zu einem Parkbremsventil 18 leitet und von dort über ein Druckabsicherungsventil 19 zu einem Gangschaltventil 20 gefördert wird. Das Gangschaltventil wird im ersten Gang gegen die Federkraft nach links umgesteuert, wodurch Druckmittel in die Leitung 21 und über ein Drosselrückschlagventil 22 durch den Kolben 11 in den Raum 14 gelangt. Dadurch wird der Kolben 15 gegen die Federkraft der Feder 16 zu seinem einen Ende bewegt und die Kupplung 2 geöffnet. Gleichzeitig wird über die Leitung 23 Druckmittel aus dem Raum 10 und dem Speicher 24 über das Drosselrückschlagventil 25 und das Gangschaltventil 20 in das Druckmittelreservoir geleitet. Somit bewegt sich der Kolben 11 durch die Federkraft der Feder 12 und den Druck im Raum 14 auf die Bremse 7 und schließt diese. Der Kolben 11 drückt somit mit einer Summenkraft aus der Kraft der Feder 12 und der hydraulischen Kraft aus dem Raum 14 auf die Lamellen der Bremse 7. Die Kraft der Feder 12 und die Fläche im Raum 14 sind so ausgelegt, daß die Bremse 7 das benötigte Drehmoment übertragen kann. Wird der zweite Gang geschaltet, so wird das Gangschaltventil 20 umgesteuert, wodurch der hydraulische Druck über die Leitung 23 in den Raum 10 gelangt und den Kolben 11 gegen die Federkraft der Feder 12 bewegt. Somit wird die Bremse 7 geöffnet. Gleichzeitig wird das Druckmittel aus dem Raum 14 über das Drosselrückschlagventil 22 und die Leitung 21 in das Druckmittelreservoir abgeführt. Der Kolben 15 schließt die Kupplung 2 mit Hilfe der Federkraft der Feder 16. Gleichzeitig wird der Speicher 24 wieder mit Druckmittel befüllt, um bei einer Rückschaltung ein sehr gutes Schaltverhalten, wie z. B. in der EP 0 659 250 B1 beschrieben, zu erreichen. Wird eine Notbremsung eingeleitet, dies kann z. B. durch einen Defekt an der Druckmittelquelle 17 oder durch manuelles Umsteuern des Parkbremsventils 18 oder einer Umsteuerung des Druckabsicherungsventils 19 geschehen, so ist die Leitung 21 und die Leitung 23 drucklos. Dies kann z. B. auch durch einen Leitungsbruch der beiden Leitungen geschehen. Sind die Leitungen 21 und 23 drucklos, so baut sich auch der Druck in den Räumen 14 und 10 über die Drosselrückschlagventile 22 und 25 ab, wodurch die Kolben 11 und 15 die Kupplung 2 und die Bremse 7 schließen. Da auf den Kolben 11 jedoch nur die Federkraft der Feder 12 wirkt, diese jedoch so ausgelegt ist, daß das für den Gang benötigte Drehmoment nur durch die Summe der Federkraft der Feder 12 und der hydraulischen Kraft im druckbeaufschlagten Raum 14 erreicht wird, wird das Fahrzeug aufgrund der geringeren Anpreßkraft auf die Bremse 7 kontrolliert abgebremst. Hierbei wird die Abbremsung ausschließlich über eine Differenzdrehzahl der Lamellen in der Bremse 7 erreicht, da die Federkraft der Feder 16 so ausgelegt ist, daß die Lamellen der Kupplung 2 keine Differenzdrehzahl aufweisen. Somit ist es möglich, die erzeugte Wärme durch die Bremse 7 aufzunehmen. Sind für verschiedene Fahrzeuge aufgrund verschiedener Gewichte unterschiedliche Bremsmomente gefordert, so kann durch Veränderung der Federkräfte der Federn 12 oder der Veränderung der Lamellenzahl der Bremse 7 das Bremsmoment verändert werden. Durch die einfache Ansteuerung des Getriebes ist es möglich, den Ventilblock 26 sowie den Speicher 24 und die Drosselrückschlagventile 22 und 25 am Getriebegehäuse anzubauen oder zu integrieren, wodurch eine kompakte, wartungsfreie Anordnung entsteht. Im Ventilblock 26 kann ebenso eine Vorderachsabschaltung 27 angeordnet sein. Ebenso ist es möglich, den Gangwechsel auch ohne Zugkraftunterbrechung durchzuführen. Es besteht die Möglichkeit, die Kupplung 2 und die Bremse 7 über Proportionalventile druckmoduliert zu schließen. Die Modulation erfolgt durch Druckregelventile, welche am Getriebe angeordnet sind und über die Bordelektronik oder eine am Getriebe befestigte Elektronik angesteuert werden. Um das Fahrzeug bei einem Defekt abschleppen zu können, bei welchem die Räume 14 und 10 mit Druckmittel befüllt, jedoch drucklos, und somit die Kupplung 2 und die Bremse 7 geschlossen sind, besteht die Möglichkeit, über eine externe Druckmittelversorgung die Betätigungseinrichtungen im Öffnungssinne zu betätigen.

Hierbei wird die Zuführung zum Raum 14 verschlossen und über eine Druckmittelversorgung Druckmittel in den Raum 10 eingebracht. Da das Druckmittel im Raum 14 nicht entweichen kann, wird der Kolben 15 durch die Bewegung des Kolbens 11 ebenfalls im Öffnungssinne betätigt, wobei von der Druckmittelversorgung nur das Druckmittelvolumen für den Raum 10 bereitgestellt wird. Somit kann die Druckmittelversorgung für diese Betätigung kleiner dimensioniert werden.

### Bezugszeichen

- 1: Antriebswelle
- 2: Kupplung
- 3: inneres Zentralrad
- 4: Planetengetriebe
- 5: Planetenträger
- 6: äußeres Zentralrad
- 7: Bremse
- 8: Gehäuse
- 9: erste Betätigungseinrichtung
- 10: Raum
- 11: Kolben
- 12: Feder
- 13: zweite Betätigungseinrichtung
- 14: Raum
- 15: Kolben
- 16: Feder
- 17: Druckmittelquelle
- 18: Parkbremsventil
- 19: Druckabsicherungsventil
- 20: Gangschaltventil
- 21: Leitung
- 22: Drosselrückschlagventil
- 23: Leitung
- 24: Speicher
- 25: Drosselrückschlagventil
- 26: Ventilblock
- 27: Vorderachsabschaltung

## Patentansprüche

1. Schaltbares Getriebe mit mindestens zwei Gängen:
- mit einer ersten Betätigungseinrichtung (9), welche durch die Kraft einer ersten Feder (12) im Schließsinne und durch Druckbeaufschlagung im Öffnungssinne betätigbar ist,
- und einer zweiten Betätigungseinrichtung (13), welche durch die Kraft einer zweiten Feder (16) im Schließsinne und durch Druckbeaufschlagung im Öffnungssinne betätigbar ist,
- bei welchem ein erster Gang durch die im Schließsinne betätigte erste Betätigungseinrichtung (9) und im Öffnungssinne betätigte zweite Betätigungseinrichtung (13) schaltbar ist,
- und ein zweiter Gang durch die im Schließsinne betätigte zweite Betätigungseinrichtung (13) und im Öffnungssinne betätigte erste Betätigungseinrichtung (9) schaltbar ist,
- und wobei im Schließsinne betätigter ersten und zweiten Betätigungseinrichtung (9, 13) ein Abtrieb des Getriebes bremsbar ist, wobei auf die erste Betätigungseinrichtung (9) ausschließlich die Federkraft der ersten Feder (12) und auf die zweite Betätigungseinrichtung (13) ausschließlich die Federkraft der zweiten Feder (16) wirkt,
- **dadurch gekennzeichnet, daß**
- bei geschaltetem ersten'Gang die Betätigungskraft der ersten Betätigungseinrichtung (9) durch die Federkraft der ersten Feder (12) und durch eine hydraulische Druckkraft, welche sich aus der Druckbeaufschlagung der zweiten Betätigungseinrichtung (13) ergibt, gebildet wird.

2. Schaltbares Getriebe nach Anspruch 1, **dadurch gekennzeichnet, daß** bei geschaltetem zweiten Gang die Betätigungskraft der im Schließsinne betätigten zweiten Betätigungseinrichtung (13) ausschließlich durch die Federkraft der zweiten Betätigungseinrichtung (13) gebildet wird.

3. Schaltbares Getriebe nach Anspruch 1, **dadurch gekennzeichnet, daß** ein Kolben (11) der ersten Betätigungseinrichtung (9) koaxial zu einem Kolben (15) der zweiten Betätigungseinrichtung (13) angeordnet ist und der Kolben (11) der ersten Betätigungseinrichtung (9) den Zylinder für den Kolben (15) der. zweiten Betätigungseinrichtung (13) bildet.

4. Schaltbares Getriebe nach Anspruch 3, **dadurch gekennzeichnet, daß** eine Druckmittelzuführung der zweiten Betätigungseinrichtung (13) durch den Kolben (11) der ersten Betätigungseinrichtung (9) erfolgt.

5. Schaltbares Getriebe nach Anspruch 1, **dadurch gekennzeichnet, daß** die Betätigungseinrichtungen (9, 13) auf Lamellenkupplungen (2, 7) wirken.

6. Schaltbares Getriebe nach Anspruch 1, **dadurch gekennzeichnet, daß** die Federkräfte der Betätigungseinrichtungen (9, 13) so ausgeführt sind, daß bei drehendem Abtrieb und Drucklosschalten der beiden Betätigungseinrichtungen (9, 13) eine radial außenliegende Kupplung (7) den Abtrieb über eine abnehmende Differenzdrehzahl der Lamellen dieser Kupplung (7) abbremst und Lamellen einer radial innenliegenden Kupplung während der Abbremsung keine Differenzdrehzahl aufweisen.

7. Schaltbares Getriebe nach Anspruch 1, **dadurch gekennzeichnet, daß** das Druckmittel von einer Druckmittelquelle (17) über ein Gangschaltventil (20) entweder über einen Speicher (24) und ein Drosselrückschlagventil (25) mit der ersten Betätigungseinrichtung (9) oder über ein Drosselrückschlagventil (22) mit der zweiten Betätigungseinrichtung (13) verbindbar ist.

8. Schaltbares Getriebe nach Anspruch 7, **dadurch gekennzeichnet, daß** zwischen der Druckmittelquelle (17) und dem Gangschaltventil (20) ein Druckabsicherungsventil (19) und ein Parkbremsventil (18) angeordnet ist, wobei durch das Druckabsicherungsventil (19) und durch das Parkbremsventil (18) das Gangschaltventil (20) mit der Druckmittelquelle verbindbar oder trennbar ist.

9. Schaltbares Getriebe nach Anspruch 1, **dadurch gekennzeichnet, daß** die erste und zweite Betätigungseinrichtung (9, 13) im Öffnungssinne betätigbar sind, wobei eine Druckmittelzuführung zur zweiten Betätigungseinrichtung (13) verschlossen wird und die erste Betätigungseinrichtung (9) mit Druckmittel beaufschlagt wird.

## Claims

1. Shift transmission with at least two gears:
- having a first actuating device (9), which is actuable in closing direction by the force of a first spring (12) and actuable in opening direction through pressurization,
- and a second actuating device (13), which is actuable in closing direction by the force of a second spring (16) and actuable in opening direction through pressurization,
- wherein a first gear is selectable by actuation of the first actuating device (9) in closing direction and actuation of the second actuating device (13) in opening direction,
- and a second gear is selectable by actuation of the second actuating device (13) in closing direction and actuation of the first actuating device (9) in opening direction,
- and wherein given actuation of the first and second actuating device (9, 13) in closing direction an output of the transmission is brakeable, wherein the first actuating device (9) is acted upon exclusively by the spring force of the first spring (12) and the second actuating device (13) is acted upon exclusively by the spring force of the second spring (16),
- **characterized in that**
- when first gear is selected, the actuating force of the first actuating device (9) is formed by the spring force of the first spring (12) and by a hydraulic pressing force arising from the pressurization of the second actuating device (13).

2. Shift transmission according to claim 1, **characterized in that** when second gear is selected, the actuating force of the second actuating device (13) actuated in closing direction is formed exclusively by the spring force of the second actuating device (13).

3. Shift transmission according to claim 1, **characterized in that** a piston (11) of the first actuating device (9) is disposed coaxially with a piston (15) of the second actuating device (13) and the piston (11) of the first actuating device (9) forms the cylinder for the piston (15) of the second actuating device (13).

4. Shift transmission according to claim 3, **characterized in that** a pressure medium supply of the second actuating device (13) is effected through the piston (11) of the first actuating device (9).

5. Shift transmission according to claim 1, **characterized in that** the actuating devices (9, 13) act upon multidisc clutches (2, 7).

6. Shift transmission according to claim 1, **characterized in that** the spring forces of the actuating devices (9, 13) are so designed that, given a rotating output and depressurization of the two actuating devices (9, 13), a radially outer clutch (7) decelerates the output by means of a decreasing differential speed of the discs of said clutch (7) and discs of a radially inner clutch during the deceleration have no differential speed.

7. Shift transmission according to claim 1, **characterized in that** the pressure medium of a pressure medium source (17) is connectable by a gear shift valve (20) either via an accumulator (24) and a throttling check valve (25) to the first actuating device (9) or via a throttling check valve (22) to the second actuating device (13).

8. Shift transmission according to claim 7, **characterized in that** a pressure protection valve (19) and a parking brake valve (18) are disposed between the pressure medium source (17) and the gear shift valve (20), wherein by means of the pressure protection valve (19) and by means of the parking brake valve (18) the gear shift valve (20) is connectable to or disconnectable from the pressure medium source.

9. Shift transmission according to claim 1, **characterized in that** the first and second actuating device (9, 13) are actuable in opening direction, wherein a pressure medium supply to the second actuating device (13) is sealed and the first actuating device (9) is loaded with pressure medium.

## Revendications

1. Boîte de vitesses avec au moins deux rapports comprenant :
- un premier dispositif d'actionnement (9) qui peut être actionné par la force d'un premier ressort (12) dans le sens de la fermeture et par une alimentation en pression dans le sens de l'ouverture,
- et un deuxième dispositif d'actionnement (13) qui peut être actionné par la force d'un deuxième ressort (16) dans le sens de la fermeture et par une alimentation en pression dans le sens de l'ouverture,
- dans laquelle un premier rapport peut être enclenché par le premier dispositif d'actionnement (9) actionné dans le sens de la fermeture et par le deuxième dispositif d'actionnement (13) actionné dans le sens de l'ouverture,
- et un deuxième rapport peut être enclenché par le deuxième dispositif d'actionnement (13) dans le sens de la fermeture et le premier dispositif d'actionnement (9) actionné dans le sens de l'ouverture,
- et, dans laquelle une sortie de la boîte de vitesses peut être freinée dans le premier et le deuxième dispositif d'actionnement (9, 13) actionnés dans le sens de la fermeture, seule la force élastique du premier ressort (12) agissant sur le premier dispositif d'actionnement (9) et seule la force élastique du deuxième ressort (16) agissant sur le deuxième dispositif d'actionnement (13),
- **caractérisée en ce que**
- lorsque le premier rapport est enclenché, la force d'actionnement du premier dispositif d'actionnement (9) est constituée de la force élastique du premier ressort (12) et d'une force de pression hydraulique obtenue par l'alimentation en pression du deuxième dispositif d'actionnement (13).

2. Boîte de vitesses selon la revendication 1, **caractérisée en ce que**, lorsque le deuxième rapport est enclenché, la force d'actionnement du deuxième dispositif d'actionnement (13) actionné dans le sens de la fermeture est constituée exclusivement par la force élastique du deuxième dispositif d'actionnement (13).

3. Boîte de vitesses selon la revendication 1, **caractérisée en ce qu'**un piston (11) du premier dispositif d'actionnement (9) est coaxial à un piston (15) du deuxième dispositif d'actionnement (13), et le piston (11) du premier dispositif d'actionnement (9) constitue le cylindre pour le piston (15) du deuxième dispositif d'actionnement (13).

4. Boîte de vitesses selon la revendication 3, **caractérisée en ce qu'**une alimentation de fluide sous pression du deuxième dispositif d'actionnement (13) est réalisée par le piston (11) du premier dispositif d'actionnement (9).

5. Boîte de vitesses selon la revendication 1, **caractérisée en ce que** les dispositifs d'actionnement (9, 13) agissent sur des embrayages à disques (2, 7).

6. Boîte de vitesses selon la revendication 1, **caractérisée en ce que** les forces élastiques des dispositifs d'actionnement (9, 13) sont réglées de façon à ce que, lorsque la sortie est en rotation et lors de la dépressurisation des deux dispositifs d'actionnement (9, 13), un embrayage (7) radial externe freine la sortie par l'intermédiaire d'une vitesse de rotation différentielle en diminution des disques de cet embrayage (7) et les disques d'un embrayage radial interne ne présentent, pendant le freinage, pas de vitesse de rotation différentielle.

7. Boîte de vitesses selon la revendication 1, **caractérisée en ce que** le fluide sous pression provenant d'une source de fluide sous pression (17) peut être relié, par l'intermédiaire d'une soupape d'enclenchement de rapport (20), soit par l'intermédiaire d'un accumulateur (24) soit d'un clapet anti-retour d'étranglement (25), avec le premier dispositif d'actionnement (9) ou par l'intermédiaire d'un clapet anti-retour d'étranglement (22) avec le deuxième dispositif d'actionnement (13).

8. Boîte de vitesses selon la revendication 7, **caractérisée en ce que**, entre la source de fluide sous pression (17) et la soupape d'enclenchement de rapport (20), se trouvent une soupape de protection contre la pression (19) et une soupape de frein de stationnement (18), la soupape d'enclenchement de rapport (20) pouvant être reliée ou séparée de la source de fluide sous pression par la soupape de protection contre la pression (19) et par la soupape de frein de stationnement (18).

9. Boîte de vitesses selon la revendication 1, **caractérisée en ce que** le premier et le deuxième dispositif d'actionnement (9, 13) peuvent être actionnés dans le sens de l'ouverture, une alimentation vers le deuxième dispositif (13) étant fermée et le premier dispositif d'actionnement (9) étant alimenté en fluide sous pression.
